# EUROPEAN PATENT APPLICATION

(11) **EP 4 628 192 A1**
(43) Date of publication of application: **08.10.2025**
(21) Application number: 24173184.3
(22) Date of filing: 29.04.2024
(51) Int. Cl.: B01D 53/06, B01D 53/04

(54) **CONVEYOR MOTIVATED LIQUID DESORBER**

(30) Priority: 05.04.2024 US 202418627752
(71) Applicant: Spiritus Technologies, PBC, White Rock, NM 87547 (US)
(72) Inventor: Cadieu, Charles Frederick, Burlingame, CA, 94010 (US); Opila, Daniel Francis, Bethesda, MD, 2081 (US); Gulsby, James Hampton, Los Alamos, NM, 8754 (US); Rau, Jon, Santa Fe, NM, 87506 (US); Tafoya, Jose Manuel, Santa Fe, NM, 87501 (US); Crall, Matthew Douglass, White Rock, NM, 87547 (US); Lee, Matthew Nicholson, Los Alamos, NM, 87544 (US); Scully, Patrick James, Los Alamos , NM, 87544 (US)
(74) Representative: Bringer IP

(57) **Abstract**

A conveyor motivated water desorber includes a hollow prism defining a desorption channel and includes an ingress port at a proximal end of the prism, and an egress port at a distal end of the prism, a conveyor motivating movement of multiple sorbent objects through the desorption channel, an injection port and an ejection port fixed at opposite ends of the prism with a desorption zone defined therebetween within the desorption channel, a water recirculation loop recirculating water injected into the desorption channel through the injection port and exiting the channel at the ejection port with a temperature increasing from the injection port into the desorption zone and decreasing from the desorption zone to the ejection port, and a gas takeoff port fixed to the prism and coupling a gas storage reservoir to the desorption channel.

## Description

### BACKGROUND OF THE INVENTION

### Field of the Invention

The present invention relates to the field of gas desorption and more particularly to the desorption of gas in a liquid medium.

### Description of the Related Art

Adsorption refers to the increase in concentration of a substance at an interface of a condensed and a liquid or gaseous layer owing to the operation of surface forces. More concretely, adsorption is the adhesion of molecules of gas, liquid, or dissolved solids to a surface. The adsorption process results in the creation of a film of an adsorbate upon a surface of an adsorbent. Adsorption differs from absorption in which one substance permeates another. As well, whereas adsorption can be characterized as a surface phenomenon, absorption involves the whole volume of the material. Like surface tension, adsorption is a consequence of surface energy.

Adsorption capitalizes upon the tendency of one or more components of a liquid or gas to collect on the surface of a solid. This tendency can be leveraged to remove solutes from a liquid or gas or to separate components that have different affinities for the solid. The process objective may be either waste treatment or the purification of valuable components of a feed stream. In an adsorption process, the solid is called the adsorbent or sorbent and the solute is known as the adsorbate.

Opposite to the process of adsorption is desorption. In desorption, the atomic or molecular species forming the adsorbate leaves the surface of the adsorbent and escapes into the surrounding. Generally, the adsorbate leaves the surface of the adsorbent when the molecules of the adsorbate gain enough energy to overcome the threshold of the bounding energy binding the adsorbate to the surface of the adsorbent. Many techniques are known for promoting desorption--particularly of a gas--but the most common techniques include some combination of heating a chamber in which the adsorbent substrate is placed in order to impart enough energy upon the adsorbate to promote the breaking of the adsorption forces.

In many instances, where it is desirable to capture the adsorbate upon desorption without contaminating the adsorbate upon desorption, a vacuum can be applied to the chamber during heating so that the adsorbate once released from the adsorbent is free from contaminates within the chamber from contamination. Managing a vacuum within a vacuum chamber and, of course, addressing the movement of sorbent into and out of the chamber, though, involves mechanical complexity and enhanced energy consumption. In contrast, when performing desorption through a water medium, no vacuum is required. There remains a need for desorbers with less mechanical complexity.

Of note, desorbers often require the application of heat to the sorbent in order to promote desorption of gas adsorbed thereon. This application of heat is difficult in vacuum, which acts as an insulator. The use of liquid phase desorbers allow heat transfer to the sorbent, but at the cost of inefficiencies caused by having to heat the liquid matrix. Thus, there remains a need to allow the efficient transfer of heat to the desorber, while minimizing inefficiencies caused by heating a heat transfer fluid.

### BRIEF SUMMARY OF THE INVENTION

Embodiments of the present invention address deficiencies of the art in respect to gas desorption in a water environment and provide a novel and non-obvious method, system and computer program product for conveyor motivated water desorption. In an embodiment of the invention, a conveyor motivated water desorber includes a hollow prism defining a desorption channel therethrough and which includes an ingress port at an exterior surface of a proximal end of the prism, and an egress port at an exterior surface of a distal end of the prism. The desorber also includes a conveyor motivating movement of multiple sorbent objects through the desorption channel. The desorber further includes an injection port and an ejection port fixed at opposite ends of the exterior surface of the prism with a desorption zone defined within the desorption channel between the injection port and the ejection port.

The desorber yet further includes a water recirculation loop recirculating water injected into the desorption channel through the injection port and exiting the channel at the ejection port of the channel with a temperature of the water increasing from the injection port into the desorption zone and decreasing from the desorption zone to the ejection port. Optionally, the recirculated water moves in a direction opposite a direction of travel of the sorbent objects. Finally, the desorber includes a gas takeoff port fixed to an exterior surface of the prism and coupling a gas storage reservoir to the desorption channel so as to receive desorbed gas desorbed from the sorbent objects as the objects move through the desorption zone.

In one aspect of the embodiment, the conveyor conveys a continuous loop of cylinder netting threaded through the desorption channel and containing therein the multiplicity of the sorbent objects disposed within the cylinder netting. However, in an alternative aspect of the embodiment, the conveyor is a drag conveyor of multiple segments dragging one or more of the sorbent objects within each segment through the desorption channel. In either circumstance, other aspects of the embodiment include a water knockout heat exchanger disposed between the gas takeoff port and the reservoir. Even further, in other aspects of the embodiment an internal diameter of the prism at the desorption zone is greater than the internal diameter of the prism at other zones of the prism outside of the desorption zone of the prism. Finally, in even yet other aspects of the embodiment, a pre-heat water circulation loop is nested within the water recirculation loop, injecting a flow of heated water into the desorption zone.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration of a conveyor motivated water desorber;
Figures 2A and 2B, taken together, pictorially depict alternative aspects of the conveyor of Figure 1, including a cylinder netting conveyor and a drag conveyor; and,
Figure 3 is a schematic illustration of a conveyor motivated water desorber with gas take off channel coupled to a sequestration system.

### DETAILED DESCRIPTION OF THE INVENTION

Embodiments of the invention provide for a conveyor motivated water desorber. In accordance with an embodiment of the invention, a conveyor motivated water desorber includes a conveyor motivating a multiplicity of different sorbent objects through a hollow prism holding a liquid as a desorption medium. A liquid recirculation loop circulates a channel of liquid through the desorption medium directionally counter to the movement of the sorbent objects in the conveyor. As well, a heated water flow traverses the desorption medium proximate to a desorption zone within the hollow prism in which CO₂ desorbs from the sorbent objects into a headspace before egressing the hollow prism at a takeoff port defined at the headspace. In this way, the temperature difference between the sorbent and the liquid is minimized throughout the desorption process., This optimizes the energy efficiency of the system by minimizing entropy generation and allowing maximum heat recovery in the cooling zone, which can then be transferred back to the heating zone without adding external energy is determined to optimize energy.

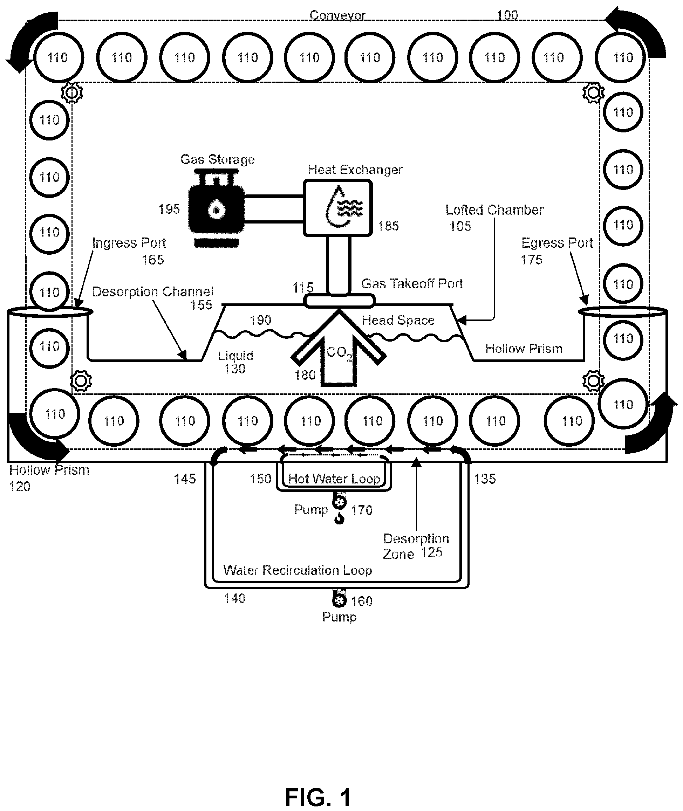

In further illustration, Figure 1 pictorially shows a conveyor motivated liquid desorber. As shown in Figure 1, a conveyor motivated liquid desorber includes a hollow prism 120 defining a desorption channel 155 therethrough. The hollow prism 120 includes an ingress port 165 at an exterior surface of a proximal end of the hollow prism 120. The hollow prism 120 also includes an egress port 175 at an exterior surface of a distal end of the hollow prism 120. The desorber further includes a conveyor 100 motivating movement of a multiplicity of sorbent objects 110 through a desorption channel 155 of liquid 130 with a headspace 190 of gas disposed above the liquid 130 at a lofted chamber 105.

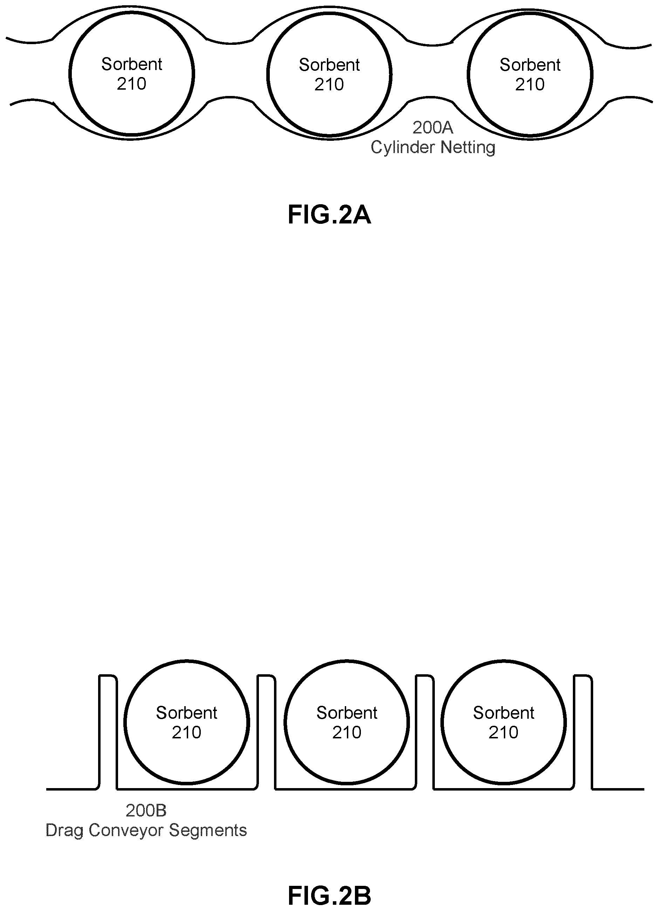

As shown in Figure 2A, in one aspect of the embodiment, the conveyor 100 conveys a loop of cylinder netting 200A threaded through the desorption channel and containing therein the multiplicity of the sorbent objects 210 disposed within the cylinder netting 200. Alternatively, in another aspect of the embodiment, as shown in Figure 2B, the conveyor is a drag conveyor 200B of multiple segments dragging sorbent objects 210 through the desorption channel.

Of note, an injection port 135 and an ejection port 145 are fixed at opposite ends of the exterior surface of the hollow prism 120 with a desorption zone 125 defined within the desorption channel 155 between the injection port 135 and the ejection port 145. As such, a water recirculation loop 140 recirculates additional water by means of a pump 160 injecting the additional water into the desorption channel 155 through the injection port 135 and exiting the desorption channel 155 at the ejection port 145 of the desorption channel 155.

Optionally, a pre-heat water circulation loop 150 is nested within the water recirculation loop 140 and injects a flow of heated water by way of pump 170 into the desorption zone 125. In consequence, a temperature of the additional water increases as the additional water contacts the heated water from the injection port 135 into the desorption zone 125 and then decreases from the desorption zone 125 to the ejection port 145. As well, optionally, the recirculating additional water of the water recirculation loop 140 moves in a direction opposite a direction of travel of the sorbent objects 110.

Finally, the desorber includes a gas takeoff port 115 fixed to an exterior surface of the hollow prism 120. The gas takeoff port 115 couples the non-liquid headspace 190 of the hollow prism 120 above the water medium 130 to a gas storage reservoir 195. Specifically, CO₂ 180 desorbs from the sorbent objects 110 within the desorption zone 120 in consequence of contacting the additional water. The desorbed CO₂ enters the headspace 190 and passes through the gas takeoff port 115 into the gas storage reservoir 195. Optionally, a water knockout heat exchanger 165 is disposed between the gas takeoff port 115 and the gas storage reservoir 195 and is adapted to promote the removal from water in the CO₂ passing from the gas takeoff port 115.

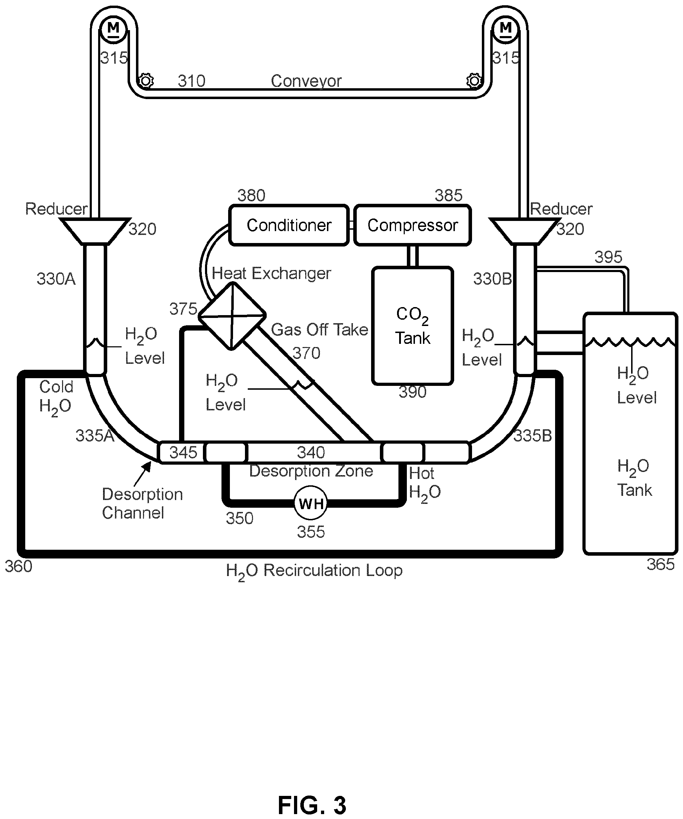

In more particular illustration of an embodiment of the invention, Figure 3 is a schematic illustration of a conveyor motivated water desorber with gas take off channel coupled to a sequestration system. The desorber includes a conveyor 310 with motors 315 driving cylinder netting encapsulating sorbent spheres and motivating the sorbent spheres in and out of a desorption channel 330A, 330B, 335A, 335B, 345. The desorption channel 330A, 330B, 335A, 335B, 345 includes different segments beginning with an ingress segment 330A, ingress elbow (flexible tubing) 335A and main channel 345, followed by egress elbow (flexible tubing) 335B and egress segment 330B. The ingress segment 330A and egress segment 330B are preferably capped with reducers 320 in order to stabilize the flow of the cylinder netting in and out of the desorption channel 330A, 330B, 335A, 335B, 345.

A water tank 365 includes a reservoir of water supporting a water level within the desorption channel 330A, 330B, 335A, 335B, 345. A drip line 395 further is provided at the egress segment 330B in order to return excess water in the egress segment 330B into the water tank 365. A water recirculation loop 360 motivates a stream of water from the ingress segment 330A to the egress segment 330B so as to create a counter flow of water within the main channel 345 opposite the movement of the sorbent spheres within the cylinder netting. To promote desorption of gas adsorbed onto the surface of the sorbent spheres, a nested heated water recirculation loop 350 heated by water heater 355 motivates heated water at an injection location of the main channel 345 and receives a return loop of the heated water at an extraction location of the main channel 345, thus defining a desorption zone 340 within the main channel 345.

A gas take off channel 370 is coupled to the main channel 345 at the desorption zone 340 at an acute angle relative to the main channel 345 and receives desorbed gas. A heat exchanger 375 at a distal end of the gas take off channel 370 acts to remove heated water from the gas within the gas take off channel 370 and to return the heated water into the main channel 345 proximate to the extraction location of the main channel 345 into the nested heated water recirculation loop 350. A conditioner 380 also is provided in line to remove heterogeneous gas molecules from the stream of desorbed gas. Finally, compressor 385, owing to the angle of the gas take off channel 370, optimally pre-compresses the conditioned gas for storage in gas storage tank 390.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "include", "includes", and/or "including," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A conveyor motivated water desorber:
a hollow prism defining a desorption channel therethrough and comprising an ingress port at an exterior surface of a proximal end of the prism, and an egress port at an exterior surface of a distal end of the prism;
a conveyor motivating movement of a multiplicity of sorbent objects through the desorption channel;
an injection port and an ejection port fixed at opposite ends of the exterior surface of the prism with a desorption zone defined within the desorption channel between the injection port and the ejection port;
a water recirculation loop recirculating water injected into the desorption channel through the injection port and exiting the channel at the ejection port of the channel with a temperature of the water increasing from the injection port into the desorption zone and decreasing from the desorption zone to the ejection port; and,
a gas takeoff port fixed to an exterior surface of the prism and coupling a gas storage reservoir to the desorption channel, the port receiving desorbed gas from the sorbent objects as the objects move through the desorption zone.

2. The desorber of claim 1, wherein the recirculating water of the water recirculation loop moves in a direction opposite a direction of travel of the sorbent objects.

3. The desorber of claim 1, wherein the conveyor conveys a loop of cylinder netting threaded through the desorption channel and containing therein the multiplicity of the sorbent objects disposed within the cylinder netting.

4. The desorber of claim 1, wherein the conveyor is a drag conveyor of multiple segments dragging one or more of the sorbent objects within respective ones of the multiple segments through the desorption channel.

5. The desorber of claim 1, further comprising a water knockout heat exchanger disposed between the gas takeoff port and the reservoir.

6. The desorber of claim 1, further comprising a pre-heat water circulation loop nested within the water recirculation loop and injecting a flow of heated water into the desorption zone.

7. The desorber of claim 1, wherein an internal diameter of the prism at the desorption zone is greater than the internal diameter of the prism at other zones of the prism outside of the desorption zone of the prism.
